# EUROPEAN PATENT APPLICATION

(11) **EP 4 442 731 A1**
(43) Date of publication of application: **09.10.2024**
(21) Application number: 23167067.0
(22) Date of filing: 06.04.2023
(51) Int. Cl.: C08G 77/04, C08G 77/08, C08G 77/16, C08G 77/20, C08G 77/38, C08L 83/04

(54) **SILICONE COMPOSITION FOR LOW-TEMPERATURE APPLICATIONS**

(71) Applicant: Venturi Lab SA, 1720 Corminboeuf (CH)
(72) Inventor: FEDURCO, Milan, 1202 GENEVE (CH); SCHMUTZ, Laurent, 1783 PENSIER (CH); DELFINO, Antonio, 1772 GROLLEY (CH)
(74) Representative: Cabinet Beau de Loménie

(57) **Abstract**

The present invention concerns a process of preparation of a polysiloxane containing methyl and ethyl groups, said process comprising the step of
a) hydrolysis reaction of the silanol precursors,
b) extension of the chain of the silanol-terminated siloxane oligomers obtained in step a) by means of a Lewis acid-induced polycondensation by the addition of a triflate salt catalyst, followed by the addition of a perfluoroborane catalyst.

It also concerns the Poly(dimethyl-co-diethyl)siloxane of formula (IIIa), the poly(methylhydro-co-diethyl)siloxane of formula (IIIb), a composition for the preparation of a silicone rubber comprising said polymers, a silicone rubber obtainable by the curing of the composition and the use of the silicone rubber in aerospace industry.

It also concerns the poly(dimethyl-co-diethyl)siloxane of formula V and its use in aerospace industry.

## Description

The field of the present invention is that of reinforced silicone rubber and silicone oil compositions able to withstand very low temperatures as required for aerospace applications.

Silicones are organosilicon polymers having the structure of siloxanes, which are characterized by silicon atoms that connect to alkyl groups such as ethyl or methyl, trifluoromethyl, aryl and other functional groups. Silicone rubber compositions derived from poly (dimethyl siloxane), commonly known as PDMS, are known to resist temperatures down to -60 °C. However, many space applications such as space exploration missions require silicone materials resisting temperatures much below -100 °C as well as tensile strength at yield (>3 MPa) and elongation at break above 300%.

Poly (diethyl siloxane), PDIES, is the only polymeric material with the glass transition temperature of -142 °C. However, pure PDIES shows several crystallization/melting transitions between -142 °C and 0 °C and, therefore, is not suitable for such applications. Silicon crystallization is usually accompanied by its stiffening, brittleness and loss of its elasticity. This may lead to degradation or even catastrophic loss of mechanical properties of objects meant for automotive applications such as space rovers. It is known from the prior art that the addition of small amount of phenyl, biphenyl- or diethyl groups (less than 10 mol%) in the poly (dimethyl siloxane) prevents cold-induced crystallization of dimethyl polysiloxane copolymer. In fact, vast majority of commercially available space silicones sold today (Momentive, Elkem, Nusil, Dow Corning, IOTA Corporation Ltd and others) belong to the family of poly (biphenyl-co-dimethyl siloxanes) or poly (methyl phenyl-co-dimethyl siloxanes). Interestingly, the increase in the biphenyl or methyl-phenyl content in such copolymers above 10 mol% shifts the glass transition towards higher temperatures and, therefore, limits very low-temperature applications (down to -150 °C). For example, RTV 560, RTV 566, RTV 567 (methyl-phenyl silicones) sold by Momentive have the glass transition temperature Tg = -115 °C so that such materials are not suitable for the South pole mission on the Moon. It is important to note that cold crystallization of RTV 566 under 25% strain conditions and prolonged waiting periods of time (60 hours) at -80 °C induced its elastic modulus increase from 5 MPa to 240 MPa which was probably the main reason for its mechanical failure and telescope misalignment.

Currently, there are no commercially available silicones having relatively high tensile strength (i.e., above 4 MPa), elongation at break above 100% and low temperature resistance below -120 °C. The only silicone available commercially is sold by Gelest (EDV-2022) containing 18-22 mol% poly(diethyl)- and 78-82 mol% poly (dimethyl siloxane) having Tg = - 131 °C. However, this material is of relatively low molecular mass (10 000 -12 000 g/mol), and it may contain cyclic siloxane oligomers which render it brittle, and, therefore, not suitable for aerospace applications.

Classical way of silicone synthesis relies on dimethyldichlorosilane hydrolysis, which results disilanols H[O-Si(CH₃)₂]ₙ-OH, hydrochloric acid and variable amounts of cyclic siloxanes. The hydrochloric acid then acts as a catalyst for the disilanol, causing it to condense into polydimethylsiloxane. From there, silanol-terminated silicone is polymerized using a variety of methods depending on the desired properties of the end product.

US4960850A describes polycondensing a polydiorganosiloxane oligomer having silanol end groups in a closed reaction zone in the presence of a catalytically effective amount of trifluoromethylsulfonic acid, at a temperature of from 20° to 160° C, while continuously removing water of polycondensation using vacuum, and terminating the polycondensation reaction by adding a catalyst neutralizing amount of a cyclopolydiorganosilazane or a polydiorganosilazane having diorganoaminosilyl end groups to the medium of reaction. However the trifluoromethylsulfonic acid has a boiling point of 162 °C and it can be distilled out while removing water under high vacuum.

Silicones with tailored molecular weights can be obtained from ring opening polymerisation (ROP) of cyclic siloxanes, which also represents the main pathway in industry, in a highly controlled fashion. The above method is relatively straightforward in the case of polymerisation of a single cyclosiloxane; however, it becomes difficult to control when attempting to copolymerize two cyclosiloxanes, for example, decamethylcyclosiloxane (D5Me10) with hexaethylcyclosiloxane (D3Et6) to prepare 1:1 poly(dimethyl-co-diethyl)siloxanes. The latter stems from different strain on the monomer molecule and different ring-opening kinetics for D3Et6 versus D5Me10. The ring opening requires relatively high reaction temperature 95-160 °C, suitable anionic initiator, endcapping agents, additives, pressure-handling reactor, and others. The silicone usually undergoes some degree of decomposition (back biting) resulting in various (or varying amount) amounts of cyclic siloxanes which may be difficult to remove from high-viscosity silicones. Furthermore, hexaethylcyclosiloxane is known to polymerize preferentially with itself forming brittle domains in the crosslinked rubber responsible for poor mechanical properties of the resulting material.

Another method of synthesizing polysiloxanes from monomeric silane precursors relies on polycondensation of silane monomers or oligomers in the presence of perfluoroarylborane catalysts such as B(C₆F₅)₃. (MichaelA. Brooks, J.B. Grande, F. Ganachaud, New Synthetic Strategies for Structured Silicones Using B(C6F5)3. Adv. Polym. Sci. 2011, 235, 161-183*).* One advantage of this method, known as Piers-Rubinsztajn reaction, as compared to ROP (relying on cyclic monomers), is that it can be done at room temperature and produces much less cyclic products than high-temperature ROP synthesis. However, major disadvantage of this method stems from the fact that it can be used for the synthesis of small amounts of silicones (mmol amounts) but unlikely for the synthesis of kg amounts of dimethyl-co-diethyl (1:1) polysiloxane. This is due to the fact that such reactions are extremely exothermic and generate huge amounts of gaseous products (typically, more than 100 liters of H₂, CH₄ or CH₃-CH₃ per kg silicone). It is clear that this would be associated with serious explosion hazard when attempting to scale up the reaction. Yet, another disadvantage of using Piers-Rubinsztajn reaction is due the fact that the borane catalyst must be solubilized in a solvent like toluene (heptane causes its precipitation) since water causes catalyst degradation. While viscosity of the solventless silicone synthesis is quite straightforward since at any time the polymer viscosity may be inspected visually or by using a viscometer, the reaction progress might be difficult to monitor in organic solvents such as toluene. Furthermore, depending on the silane precursor structure (i.e., -OH, -OCH₃ or -OCH₂CH₃), the reaction temperature has to be increased in order to polymerize the monomer. For example, the -OCH₃ group reaction of dimethoxydimethylsilane with diethylsilane takes place at 22-23 °C, while 70 °C is needed for the -OCH₂CH₃ conversion into ethane in the presence of B(C₆F₅)₃.

It is known from the prior art that the rate of silane hydrolysis depends on its electronic structure, the solvent used, the presence/absence of catalyst and the reaction temperature. For example, while hydrolysis of dichlorodimethylsilane in water takes place even at temperatures close to zero, the diethoxydimethylsilane is stable at 25 °C and its hydrolysis requires temperatures above 50 °C, eventually, the presence of a suitable acid or base catalyst.

The Applicant has discovered that a method of low-temperature (1 - 7 °C) diethyl/dimethyl/ethylmethyl chlorosilane hydrolysis results reproducibly in silanol-terminated poly(dimethyl-co-diethyl) siloxane or polymethylethylsiloxane of average molecular mass Mw ∼1000 (viscosity 33-36 mPa.s) which can be conveniently polymerized, in the presence of suitable Lewis acid catalyst, into high-molecular weight PDIES or PEMS (Mw-50 000 -100000) having a very low glass temperature and no crystallization/melting transitions et low temperature. This method leads to relatively rapid (within minutes) viscosity build up without the requirement of high reaction temperatures (above 100 °C) and with minimum amount of cyclic silicone byproducts (ppm amounts). This inventive method of PDIES/PEMS synthesis solves the problem of large volumes of gaseous product formation (H₂, methane or ethane) as experienced in Piers-Rubinsztajn reaction, limiting thus high exothermicity and danger of explosion as discussed above.

Yet, another problem to be solved is the crosslinker compatibility with the vinyl-terminated PDIES. In general, crosslinking of phenyl silicones requires phenyl-containing crosslinkers because of phase separation and increased foaming when using classical methylhydro- (PHMS) or dimethyl-co-methylhydro polysiloxane crosslinkers. The Applicant noticed similar phenomenon in the case of dimethyl-co-diethyl polysiloxanes. Extensive foaming was observed when vacuum applied to the PDIES/PHMS mix either in the absence or in the presence of silica. In order to solve such crosslinker/diethyl silicone incompatibility issues, the Applicant synthesized a new type of -methylhydro-co-diethyl-siloxane crosslinker with excellent compatibility with PDIES.

The present invention therefore concerns a process of preparation of polysiloxane containing methyl and ethyl groups, said process comprising the step of
a) hydrolysis reaction of the silanol precursors;
b) extension of the chain of the silanol-terminated siloxane oligomers obtained in step a) by means of a Lewis acid-induced polycondensation by the addition of a triflate salt catalyst, in particular In(III)triflate, followed by the addition of a perfluoroborane catalyst, in particular Tris(Pentafluorophenyl)borane.

Advantageously the polysiloxane containing methyl and ethyl groups is selected in the group consisting of:
- a poly(dimethyl-co-diethyl) siloxane or poly(methylhydro-co-diethyl) siloxane of the following formula (I): 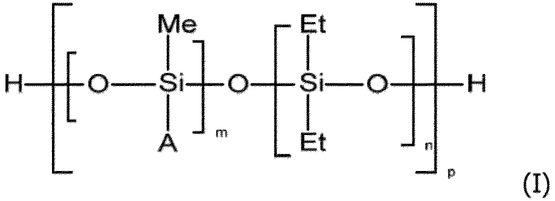
   in which A represents a methyl group or a hydrogen atom
   m and n represents the molar % of the repeating motif -O-Si(Me)(A) and -O-Si(Et₂) respectively with
   m = 0.5-0.8, n = 0.2-0.5 and m+n =1
   p represents the number of both repeating motifs in order to obtain a weight average molecular weight in the range of 20 000 g/mol to 150 000 g/mol when A represents a methyl group and in the range of 300 g/mol to 3500 g/mol when A represents a hydrogen atom
      and
- a poly(ethyl methyl siloxane) of the following formula (II): 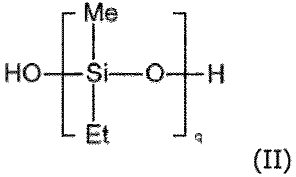 in which q represent the number of repeating motifs.

More advantageously the silanol precursors of step a) is selected among (R1)₂ethylmethylsilane, a mixture of (R1)₂dimethylsilane and (R1)₂diethylsilane, a mixture of (R1)₂methylsilane and (R1)₂diethylsilane, in which R1 represents a chlorine atom, a (C₁-C₆) alkoxy group, (advantageously a methoxy group or an ethoxy group), an acetoxy group or an oxime group, advantageously R1 represents a chlorine atom, a methoxy group or an ethoxy group, more advantageously R1 represents a chlorine atom.

In the formulae of the present invention Me is a methyl group and Et is an ethyl group.

In the sense of the present invention the terms *"comprised between x and y"*, "*in the range of x-y", "=x-y", "from x to y"* is intended to mean that the limits of the range, x and y, are included.

In the sense of the present invention, the term "(C₁-C₆) alkoxy group" is intended to mean any linear or branched saturated alkoxy group having 1 to 6 carbon atoms, in particular the group OCH₃ (methoxy) and OCH₂CH₃ (ethoxy).

The process according to the present invention is therefore for the preparation of a polysiloxane containing methyl and ethyl groups, advantageously of a poly(dimethyl-co-diethyl) siloxane or poly(methylhydro-co-diethyl) siloxane of the following formula (I): 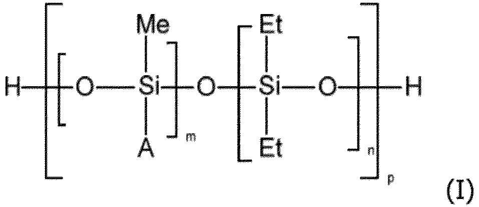
in which A represents a methyl group or a hydrogen atom
m and n represents the molar % of the repeating motif -O-Si(Me)(A) and -O-Si(Et₂) respectively with
m = 0.5-0.8, n = 0.2-0.5 and m+n =1
p represents the number of both repeating motifs in order to obtain a weight average molecular weight in the range of 20 000 g/mol to 150 000 g/mol when A represents a methyl group and in the range of 300 g/mol to 3500 g/mol when A represents a hydrogen atom. Viscosimetry (according to the standard ASTM E3116-18 of January 25, 2018), 1H NMR and FTIR can be used to measure the weight average molecular weight of the polymer.

Advantageously m = 0.5-0.7 and n = 0.3-0.5 with m+n =1, more advantageously m = 0.5-0.6 and n = 0.4-0.5 with m+n =1, still more advantageously m = n = 0.5.

In particular the poly(dimethyl-co-diethyl) siloxane according to the invention has the following formula Ia: 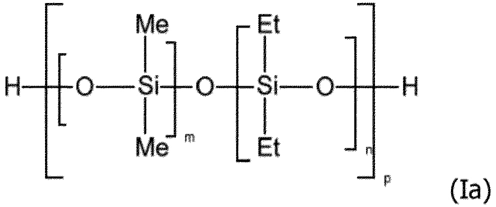 in which m, n and p are as defined above.

Advantageously the poly(dimethyl-co-diethyl) siloxane of formula Ia according to the invention has a weight average molecular weight, in particular using the viscosimetry method of measure according to the standard ASTM E3116-18 of January 25, 2018, in the range of 20 000 g/mol to 150 000 g/mol, more advantageously of between 30 000 g/mol and 100 000 g/mol, still more advantageously of between 40 000 g/mol and 80 000 g/mol, in particular of between 45 000 g/mol and 60 000 g/mol.

In particular the poly(methylhydro-co-diethyl) siloxane according to the invention has the following formula Ib: 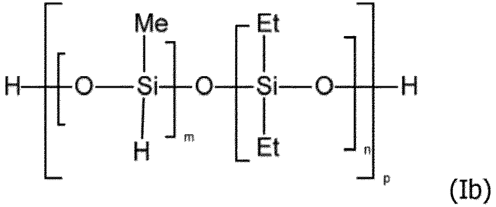 in which m, n and p are as defined above.

Advantageously the poly(methylhydro-co-diethyl) siloxane of formula Ib according to the invention has a weight average molecular weight, in particular using the viscosimetry method of measure according to the standard ASTM E3116-18 of January 25, 2018, in the range of 300 g/mol to 3500 g/mol, more advantageously of between 500 g/mol and 3 000 g/mol, still more advantageously of between 1 000 g/mol and 2 000 g/mol.

The process according to the present invention is also advantageously for the preparation of a poly(ethyl methyl siloxane) of the following formula (II): 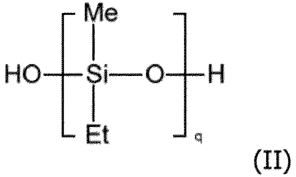 in which q represent the number of repeating motifs.

Advantageously the poly(ethyl methyl siloxane) according to the invention has a weight average molecular weight, in particular using the viscosimetry method of measure according to the standard ASTM E3116-18 of January 25, 2018, in the range of 1 000 g/mol and 200 0000 g/mol.

Step a) of the process according to the present invention consists in the hydrolysis reaction of the silanol precursors.

Advantageously, the silanol precursors are selected among (R1)₂ethylmethylsilane, a mixture of (R1)₂dimethylsilane and (R1)₂diethylsilane and a mixture of (R1)₂methylsilane and (R1)₂diethylsilane, in which R1 represents a chlorine atom, a (C₁-C₆) alkoxy (advantageously a methoxy group or an ethoxy group), an acetoxy group or an oxime group, advantageously R1 represents a chlorine atom a methoxy group or an ethoxy group, more advantageously R1 represents a chlorine atom group.

Therefore, advantageously the silanol precursors are chlorinated or ethoxylated silanol precursors, in particular chlorinated silanol precursors. More advantageously they are selected among dichloroethylmethylsilane, diethoxyethylmethylsilane, a mixture of dichlorodimethylsilane and dichlorodiethylsilane, a mixture of dichloromethylsilane and dichlorodiethylsilane, a mixture of diethoxydimethylsilane and diethoxydiethylsilane and a mixture of diethoxymethylsilane and diethoxydiethylsilane, more advantageously among dichloroethylmethylsilane, a mixture of dichlorodimethylsilane and dichlorodiethylsilane and a mixture of dichloromethylsilane and dichlorodiethylsilane.

The products obtained after step a) are oligomers of siloxane containing methyl and ethyl groups, in particular oligomers of (dimethyl-co-diethyl) siloxane or of (methylhydro-co-diethyl) siloxane or of ethyl methyl siloxane. Advantageously these oligomers have a weight average molecular weight, in particular using the viscosimetry method of measure according to the standard ASTM E3116-18 of January 25, 2018, of between 500 and 3000 g/mol, more advantageously of 1000 -3000 g/mol when A is a methyl. The possible reaction schemes (scheme 1 and 2) of step a) are as follow: 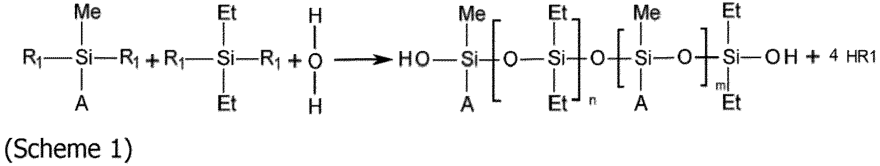 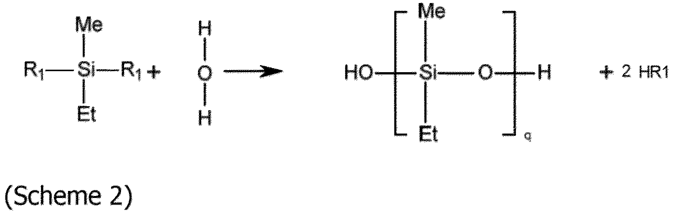 in which A, m and n are as defined above and R1 represents a chlorine atom, a C1-C6 alkoxy group (in particular a methoxy group or an ethoxy group), an acetoxy group or an oxime group, advantageously R1 represents a chlorine atom, a methoxy group or an ethoxy group, more advantageously R1 represents a chlorine atom.

In an advantageous embodiment, step a) is performed at a temperature of between 0°C and 40°C, more advantageously between 5°C and 35°C. In an advantageous manner the reaction is first carried out at a temperature of between 0°C and 7°C, advantageously between 5°C and 7°C, followed by an increase of the temperature to a range of 30-40°C, advantageously 30-35°C.

More advantageously, the reaction is carried out under stirring, still more advantageously by addition of the silanol precursors in water, in particular dropwise, more advantageously at a rate of between 1 and 5 drops/second, in particular 3 drops/second.

In an advantageous embodiment step a) lasts between 1 and 2 hours.

In an advantageous embodiment the water molar concentration (w) is higher than that of both silanol precursors (a+b): w>a+b In a further embodiment, the oligomers obtained in step a) are separated from the aqueous phase containing HR1, in particular HCl, obtained after performing step a), before being used in step b) of the process according to the invention, advantageously by the use of heptane extraction.

Step b) of the process according to the present invention consists in the extension of the chain of the silanol-terminated siloxane oligomers obtained in step a), advantageously the poly(dimethyl-co-diethyl) siloxane oligomers or poly(methylhydro-co-diethyl) siloxane oligomers or the ethyl methyl siloxane oligomers, by means of a Lewis acid-induced polycondensation by the addition of a triflate salt catalyst followed by the addition of a perfluoroborane catalyst. Advantageously the polymer obtained after step b) is therefore the polymer of formula I or II as detailed above.

Advantageously, the triflate salt catalyst is selected among In(III)triflate, Bi(III)triflate, Al(III)triflate and mixture thereof, more advantageously it is In(III)triflate.

Advantageously, the perfluoroborane catalyst is Tris(Pentafluorophenyl)borane.

The reaction schemes (schemes 3 and 4) of step b) with the In(III)triflate and Tris(Pentafluorophenyl)borane catalysts is as follow: 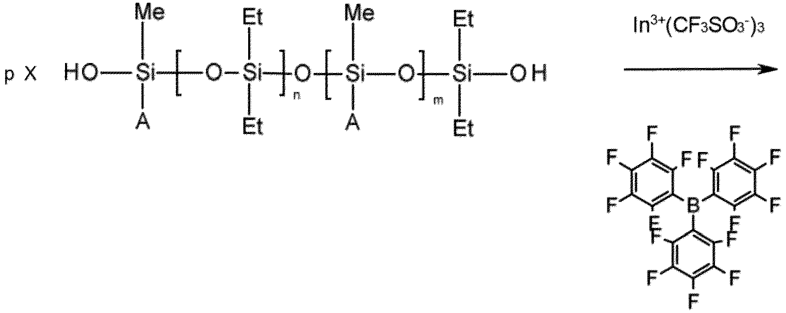 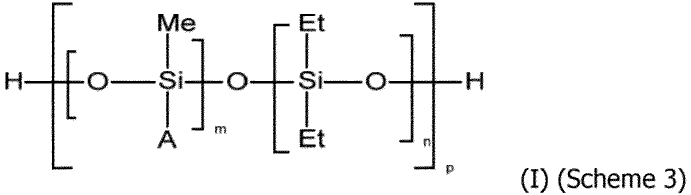 in which A, m, n and p are as defined above. 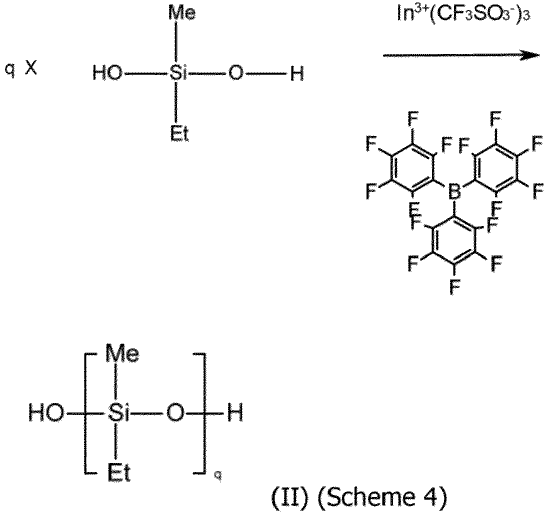 in which q is as defined above.

The polymer of formula (I) is an alternating copolymer.

The polymer of formula (II) is an homopolymer.

Advantageously, step (b) is carried out at room temperature (20-25°C). In an advantageous embodiment:
- the triflate salt catalyst, in particular In(III)triflate, is first added (step b1) with stirring then the reaction is left to proceed without any stirring, advantageously for at least 1-12 hours;
- the perfluoroborane catalyst, in particular Tris(Pentafluorophenyl)borane, is then added (step b2) with stirring then the reaction is left to proceed without any stirring, advantageously for at least 1-12 hours.

Advantageously step (b) is carried out in bulk, without any solvent.

In an advantageous embodiment, the triflate salt catalyst, in particular In(III)triflate, is present in an amount of 0.1mg to 1mg per gram of oligomers.

In another advantageous embodiment, the perfluoroborane catalyst, in particular Tris(Pentafluorophenyl)borane, is present in an amount of 0.1mg to 1mg per gram of oligomers.

In a particular embodiment step b) is carried out under inert atmosphere, advantageously under nitrogen.

The process according to the present invention can comprise a step c1) of addition of a vinyl terminal group by reaction of the polymer obtained in step b) with vinyldimethylmethoxysilane or vinyl-1,1,3,3-tetramethyldisiloxane in presence of a Lewis acid catalyst such as In(III)triflate without any solvent or B(C₆F₅)₃ in toluene as the solvent or without any solvent, at temperatures from 20 to 60 °C, advantageously in order to obtain a polymer having the following formula (III): 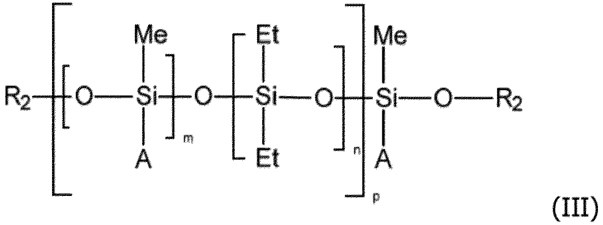
in which A, m, n and p are as defined in formula I
and R₂ = -Si(CH₃)₂CH=CH₂
- or a polymer having the following formula (IV): 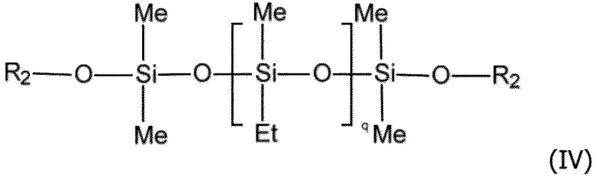 in which q is as defined in formula II and R₂ = -Si(CH₃)₂CH=CH₂.

The polymer of formula (III) is an alternating copolymer.

The polymer of formula (IV) is a homopolymer.

Therefore, the polymer obtained in step c1) can be the poly(dimethyl-co-diethyl)siloxane having the following formula (IIIa): 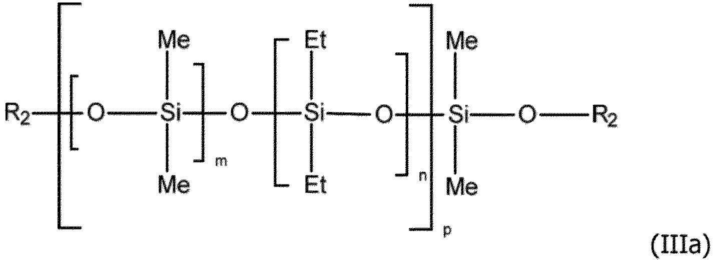 in which R₂, m, n and p are as defined in formula III or the poly(methylhydro-co-diethyl)siloxane having the following formula (IIIb): 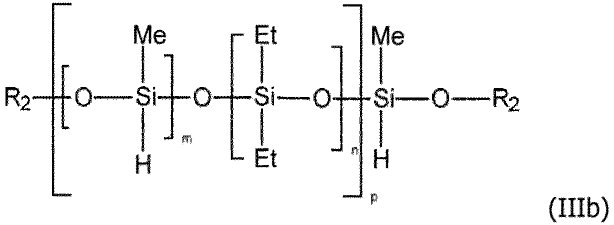 in which R₂, m, n and p are as defined in formula III.

The polymer of formula (IIIa) and (IIIb) are alternating copolymers.

Advantageously the poly(dimethyl-co-diethyl)siloxane of formula (IIIa) has a glass transition temperature (Tg) measured by DSC according to the standard ASTM E1356 of May 15, 2014 in the range of -130°C to -142 °C, in particular in the range of -135°C to -141°C, more particularly of -139°C. More advantageously it has a weight average molecular weight measured by viscosimetry according to the standard ASTM E3116-18 of January 25, 2018, in the range of 20 000 g/mol to 150 000 g/mol, still more advantageously of between 30 000 g/mol and 100 000 g/mol, even still more advantageously of between 40 000 g/mol and 80 000 g/mol, in particular of between 45 000 g/mol and 50 000 g/mol.

Advantageously the poly(methylhydro-co-diethyl)siloxane of formula (IIIb) has a glass transition temperature measured by DSC according to the standard ASTM E1356 of May 15, 2014 in the range of -130°C to -146 °C. More advantageously it has a weight average molecular weight measured by viscosimetry according to the standard ASTM E3116-18 of January 25, 2018 in the range of 300 g/mol to 3500 g/mol, more advantageously of between 500 g/mol and 3 000 g/mol, still more advantageously of between 1 000 g/mol and 2 000 g/mol.

Advantageously the poly(ethyl methyl siloxane) siloxane of formula (IV) has a glass transition temperature measured by DSC according to the standard ASTM E1356 of May 15, 2014 in the range of -130°C to -142°C.

More advantageously it has a weight average molecular weight measured by viscosimetry according to the standard ASTM E3116-18 of January 25, 2018 in the range of 20 000g/mol to 200 000 g/mol, advantageously of 20 000g/mol to 150 000 g/mol.

The reaction schemes (scheme 5 and 6) of step c1) are as follow: 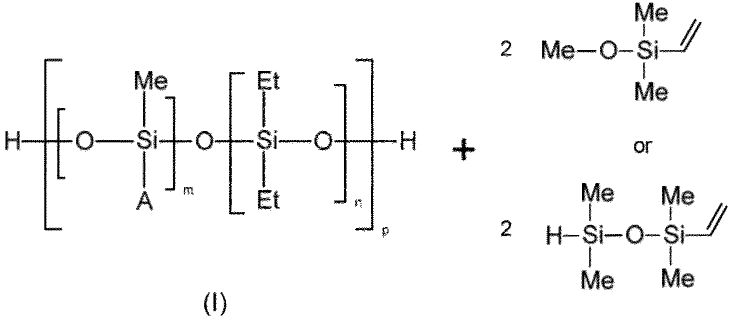 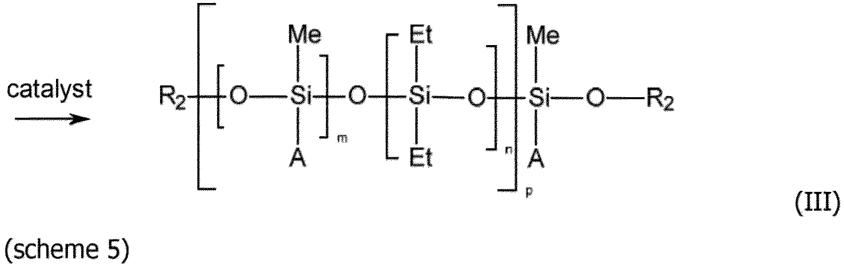 in which R₂, A, m, n and p are as defined above. 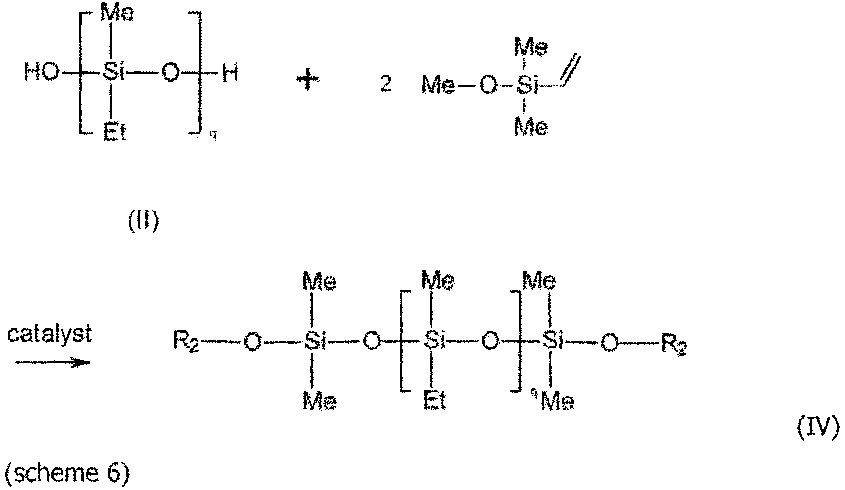 in which R₂ and q are as defined above.

In a particular embodiment, the Lewis acid catalyst is a triflate salt, advantageously selected among In(III)triflate, Bi(III)triflate, (Al(III)triflate and mixture thereof, more advantageously it is In(III)triflate, and step c1) is carried out without any solvent, more advantageously at a temperature of between 50°C and 70°C, still more advantageously the catalyst is present in an amount of 0.1mg to 2mg per gram of polymer.

In another particular embodiment, the Lewis acid catalyst is a perfluoroborane such as B(C₆F₅)₃ and step c1) is carried out without any solvent or with the use of toluene as the solvent, more advantageously at room temperature (20-25°C), still more advantageously the catalyst is present in an amount of 0.1-1mg per gram of polymer.

In a further particular embodiment, the Lewis acid catalyst is a mixture of a triflate salt and a perfluoroborane, advantageously a mixture of In(III)triflate and B(C₆F₅)₃ and step c1) is carried out without any solvent, more advantageously at room temperature (20-25°C), still more advantageously the catalyst is present in an amount of 0.1-1mg per gram of polymer.

In a further particular embodiment, the catalyst used in step b) is not removed when step c1) is carried out and the perfluoroborane, in particular B(C₆F₅)₃, is further added. Advantageously step c1) is carried out without any solvent, more advantageously at room temperature.

The process according to the present invention can comprise a step c2) of addition of a trialkylsilyl terminal group by reaction of the polymer obtained in step b) with a trialkylsilane, in particular a trimethylsilane or a triethyl silane, more particularly a triethyl silane, in presence of a Lewis acid catalyst such as B(C₆F₅)₃ in toluene as the solvent, advantageously in order to obtain a polymer having the following formula (V): 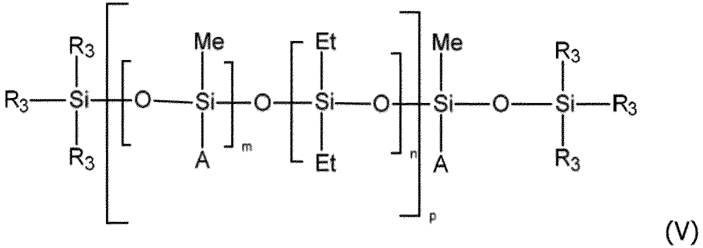
in which A, m, n and p are as defined in formula I
and each R₃ represents independently of each other a saturated, linear or branched, C₁-C₆ alkyl group, advantageously an ethyl group or
- a polymer having the following formula (VI): 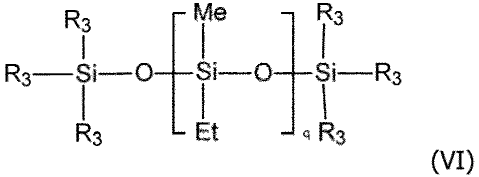
in which q is as defined in formula II
and each R₃ represents independently of each other a saturated, linear or branched, C₁-C₆ alkyl group.

In the sense of the present invention, the term "(C₁-C₆) alkyl group" is intended to mean any linear or branched saturated alkyl group having 1 to 6 carbon atoms, in particular the group CH₃ (methyl) and CH₂CH₃ (ethyl). The polymer of formula (V) is a silicone oil and is an alternating copolymer. The polymer of formula (VI) is a silicone oil and is an homopolymer. Advantageously the poly(dimethyl-co-diethyl)siloxane of formula (IVa) has a glass transition temperature (Tg) measured by DSC according to the standard ASTM E1356 of May 15, 2014 in the range of -130°C to -145 °C, in particular in the range of -135°C to -142°C, more particularly of -136°C. More advantageously it has a weight average molecular weight measured by viscosimetry according to the standard ASTM E3116-18 of January 25, 2018, in the range of 40 000g/mol to 65 000g/mol, still more advantageously of between 45 000g/mol and 55 000g/mol. Advantageously the poly(ethyl methyl) siloxane of formula (VI) has a glass transition temperature (Tg) measured by DSC according to the standard ASTM E1356 of May 15, 2014 in the range of -130 °C to -142°C,.

More advantageously it has a weight average molecular weight measured by viscosimetry according to the standard ASTM E3116-18 of January 25, 2018, in the range of 20 000 g/mol to 150 000 g/mol.

The reaction schemes (schemes 7 and 8) of step c2) is as follow: 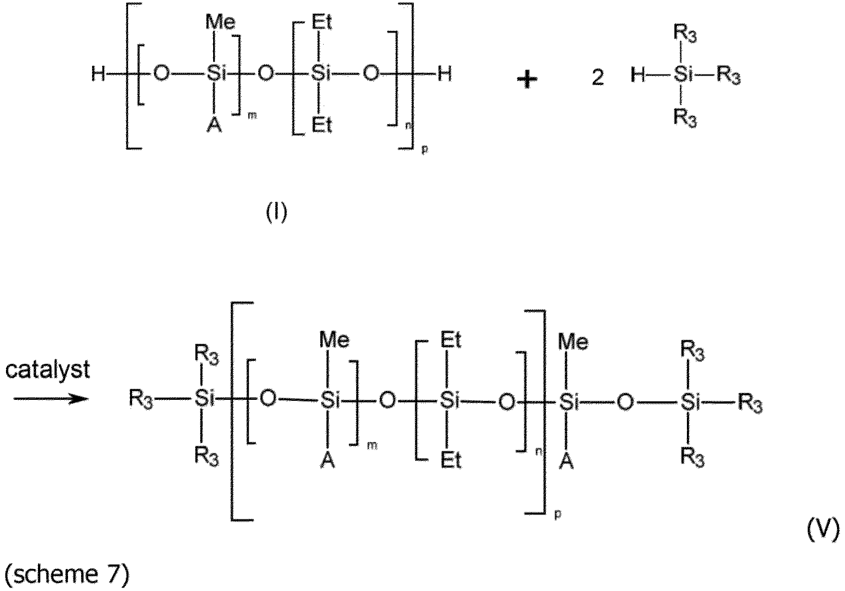 in which R₃, A, m, n and p are as defined above. 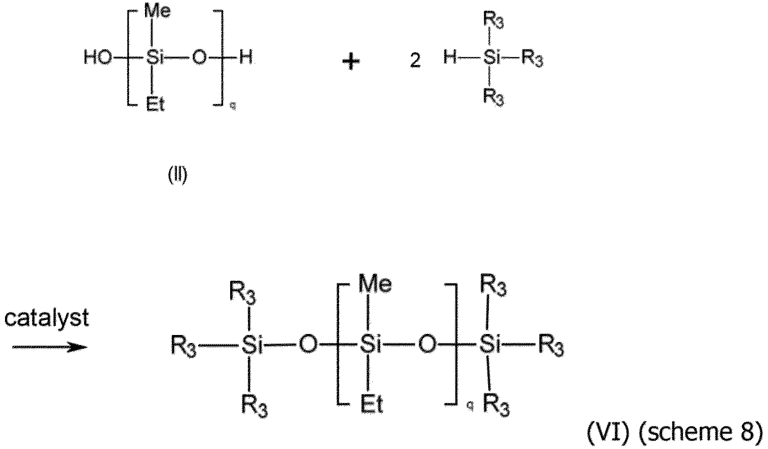 in which R₃, and q are as defined above.

In another particular embodiment, the Lewis acid catalyst is a perfluoroborane such as B(C₆F₅)₃ and step c2) is carried out without any solvent or with the use of toluene as the solvent, more advantageously at room temperature (20-25°C), still more advantageously the catalyst is present in an amount of 0.1-1mg per gram of polymer.

In another particular embodiment, the process according to the invention contains a further step d) after step c1) or c2) of removal of the catalyst used in step b) and c1) or in step c2), advantageously by the use of aluminum oxide.

Advantageously, the process according to the invention is for the preparation of a 50/50 poly(dimethyl-co-diethyl)siloxane or 50/50 poly(methylhydro-co-diethyl)siloxane.

The present invention also concerns the poly(dimethyl-co-diethyl)siloxane of formula (IIIa) as described above, advantageously obtainable by the process according to the present invention, more advantageously having:
- a weight average molecular weight measured by viscosimetry according to the standard ASTM E3116-18 of January 25, 2018 in the range of 20 000 g/mol to 150 000 g/mol, more advantageously of between 30 000 g/mol and 100 000 g/mol, still more advantageously of between 40 000 g/mol and 80 000 g/mol, in particular of between 45 000 g/mol and 50 000 g/mol, and/or
- a glass transition temperature measured by DSC according to the standard ASTM E1356 of May 15, 2014 in the range of -130°C to -142 °C, in particular in the range of -135°C to -141°C, more particularly of -139°C. The polymer of formula (IIIa) is an alternating copolymer.

The present invention also concerns the poly(methylhydro-co-diethyl)siloxane of formula (IIIb) as described above, advantageously obtainable by the process according to the present invention, more advantageously having:
- a weight average molecular weight measured by viscosimetry according to the standard ASTM E3116-18 of January 25, 2018 in the range of 300 g/mol to 3500 g/mol, more advantageously of between 500 g/mol and 3 000 g/mol, still more advantageously of between 1 000 g/mol and 2 000 g/mol, and/or
- a glass transition temperature measured by DSC according to the standard ASTM E1356 of May 15, 2014 in the range of -130°C to -146 °C. The polymer of formula (IIIb) is an alternating copolymer.

The present invention also concerns the poly(dimethyl-co-diethyl)siloxane of formula (V) as described above, advantageously obtainable by the process according to the present invention, more advantageously having:
- a weight average molecular weight measured by viscosimetry according to the standard ASTM E3116-18 of January 25, 2018 in the range of 500 g/mol to 150 000 g/mol, advantageously in the range of 1 000 g/mol to 3 000 g/mol and/or
- a glass transition temperature measured by DSC according to the standard ASTM E1356 of May 15, 2014 in the range of -130°C to -145 °C, in particular in the range of -135°C to -142°C, more particularly of -139 °C. The polymer of formula (V) is an alternating copolymer.

The polymer of formula (V) is a silicone oil.

The present invention also concerns a composition for the preparation of a silicone rubber comprising:
- (A) 60-94% by weight of the vinyl-terminated poly(dimethy-co-diethyl)siloxanes of formula (IIIa) according to the present invention ;
- (B) 5-35% by weight of reinforcing filler(s), advantageously pyrogenic silica;
- (C) 1-5% by weight of crosslinkers having Tg < -130 °C; advantageously having the formula (IIIb) according to the present invention;
- (D) a suitable quantity of a curing catalyst, advantageously a Pt(0) catalyst such as Platinum(0)-2,4,6,8-tetramethyl-2,4,6,8-tetravinylcyclotetrasiloxane dissolved in methylvinylcyclosiloxanes and
- (E) optionally a Pt inhibitor such as 1-Ethynyl-1-cyclohexanol

In the present application, the term "silicone rubber" is understood to mean a substance having the ability to remain elastic in the temperature range from 200 to -140 °C.

The respective amounts of compound (A) (vinyl-terminated poly(dimethy-co-diethyl)siloxanes of formula (IIIa)) and of compound (C) (crosslinkers) in the composition according to the invention are governed by the ratio between the number of units (R'HSiO 2/2) and the number of alkenyl groups and are adjusted accordingly taking into account the relative proportions of the alkenyl moieties in compound (A) and the relative proportions of units (R'HSiO 2/2) in compound (C).

An essential feature of the silicone rubber composition according to the invention is the ratio between the number of units (R'HSiO 2/2) of compound (C) introduced into the silicone base composition and the number of diethyl groups of the compound (A) introduced into the rubber composition. According to the invention, this ratio between the number of units (R'HSiO 2/2) and the number of alkenyl groups is greater than 3. A value less than or equal to 3 results in a composition whose mechanical and adhesive properties are insufficient for use as self-adhering PDIES silicone on metallic surfaces such as stainless steel or titanium.

Advantageously, this ratio is greater than 4 and less than 25.

The curing catalyst is a hydrosilylation catalyst, in particular a platinum Pt (0) catalyst, more particularly complexed with divinyltetraalkylsiloxane ligands, preferably 1,3-divinyltetramethylsiloxane, such as Platinum(0)-2,4,6,8-tetramethyl-2,4,6,8-tetravinylcyclotetrasiloxane dissolved in methylvinylcyclosiloxanes. Such catalysts are for example described in document WO 0142258 A1. The Karstedt catalyst is most particularly suitable. As in any conventional hydrosilylation reaction, the amount of catalyst in the composition is catalytic. By catalytic amount is meant less than one molar equivalent of platinum relative to the amount of unsaturations of olefinic double bond type present in the composition. In general, it suffices to introduce less than 1000 ppm and preferably more than 30 ppm of platinum calculated relative to the total mass of compound (A) and of compound (C).

The reaction designs (R'HSiO _{2/2)} of the compound (C) and alkenyl groups of the compound (A) hydrosilylation leads to the crosslinking of the organopolysiloxanes and allows producing a crosslinked silicone rubber composition. Crosslinking is typically initiated by bringing the silicone rubber composition to a temperature sufficient to allow the hydrosilylation reaction. It is generally carried out at a temperature between 15°C and 200°C, for example between 20°C and 150°C, better still between 50°C and 150°C.

In a known manner, crosslinkable silicone compositions generally contain an inhibitor. Inhibitors are generally used to control the temperature and time of the hydrosilylation crosslinking reaction and thus further control the crosslinking reaction, especially its onset and speed. If a crosslinking inhibitor is used, the amount of inhibitor used is preferably from 1 to 50,000 ppm, more preferably from 20 to 2000 ppm, and in particular from 100 to 1000 ppm, relative to the total mass of compound (A) and of the compound (C). As inhibitors, acetylenic alcohols, such as 1-ethynyl-1-cyclohexanol, 2-methyl-3-butyn-2-ol, 3,5-dimethyl-1-hexyne-3-ol, 3-methyl-1-dodecyn-3-ol, 2-phenyl-3-butyn-2-ol. Preferably, the silicone rubber composition according to the invention contains an inhibitor.

The silicone rubber composition according to the invention also has the essential characteristic of comprising a reinforcing filler, advantageously hydrophobic silica, in particular pyrogenic silica. In known manner, a hydrophobic silica is a silica, part of the surface of which is covered with organic groups such as alkyl groups. The silica can be any reinforcing silica known to those skilled in the art, in particular any precipitated or pyrogenic silica. Preferably, the silica has a BET specific surface area of less than 450 m ² / g, preferably within a range ranging from 80 to 400 m ² / g, in particular from 100 to 300 m ² / g, advantageously from 150 to 250 m ² / g. It is also possible to use a mixture of several silica, for example, Aerosil R 8200, Aerosil R 812 S, Aerosil E 9200 from Evonik or Cab-O-Sil TS 530 from Cabot

To make silica hydrophobic, it is well known to modify the surface of silica. The modification of the surface of a silica can be obtained in a known manner by reacting the silica with compounds which bear hydrophobic groups such as trialkylsilyl groups, in particular trimethylsilyl. Particularly suitable is a silica which has a surface modified by trimethylsilyl groups. Mention may be made, for example, of those obtained by modification with hexamethyldisilazane.

The level of hydrophobic silica is adjusted by a person skilled in the art as a function of its specific surface area and of the use of the silicone rubber composition. Preferably, the level of hydrophobic silica in the silicone rubber composition is greater than or equal to 5% of the total weight of silica, of compound (A) and of compound (C) and less than or equal to 35% of the total weight of silica, of the compound (A) and compound (C). Below 5% of the total weight of silica, of compound (A) and of compound (C), the reinforcing properties of the composition may prove to be insufficient for certain applications. Beyond 35% of the total weight of silica, of compound (A) and of compound (C), the silicone rubber formulation may not be possible (solid paste obtained when using the silica HDK H2000, Wacker or when using more than 20 wt% of Cab-O-Sil TS 530, Aerosil R 8200, or Aerosil E 9200).

The silicone rubber composition in accordance with the invention can be prepared by incorporating the hydrophobic silica into compound (A), followed by the addition of the compound (C) with mixing, and finally that of the catalyst. When an inhibitor is used, it is typically added to the mixture of hydrophobic silica and the compound (A) before the incorporation of compound (C).

The present invention also concerns a silicone rubber obtainable by the curing of the composition according to the present invention and as described above and having a glass transition temperature measured by DSC according to the standard ASTM E1356 of May 15, 2014 in the range of -130°C to -142 °C, advantageously in the range of -135°C and -140°C, in particular of -138°C and/or no crystallization/melting transitions measured by DSC according to the standard ASTM E1356 of May 15, 2014 in the range of -140°C to +250 °C.

More advantageously the silicone rubber according to the invention has an elongation at break (measured by INSTRON 34TM-10, France, using the Standard AFNOR NF T 46002 of September 1988, H₂) above 100%, in particular above 200%, more particularly above 300% and for example of 348%.

Even more advantageously the silicone rubber according to the invention has an elastic modulus >1 MPa, advantageously >3 MPa, measured by INSTRON 34TM-10, France, according to the standard AFNOR NF T 46002 of September 1988.

Still more advantageously the silicone rubber according to the invention has a shore A in the range 35-40 measured by Durometer Hardness according to the standard ASTM D 2240 of July 23, 2021.

The present invention also concerns the use of the silicone rubber or of the poly(dimethyl-co-diethyl)siloxane of formula (V) according to the present invention in aerospace industry, in particular in space rovers. More particularly, The present invention also concerns the use of the poly(dimethyl-co-diethyl)siloxane of formula (V) according to the present invention as a silicone oil for electric motors at low temperature, in particular below -100 °C.

The present invention finally concerns the use of the poly(methylhydro-co-diethyl)siloxane having the following formula (IIIb) according to the present invention as a crosslinker for the preparation of a silicone rubber.

The aforementioned characteristics of the present invention, as well as others, will be better understood on reading the following description of several exemplary embodiments of the invention, given by way of illustration and without limitation.

### Example 1: Poly(diethyl-co-dimethyl)siloxane (50/50) synthesis (PDIES-50/50)

### STEP 1 (step a)

First, 1 kg Dichlorodiethylsilane (SID3402.0-1KG, Gelest, USA) was distilled at 40-50°C/20 mbar vacuum into the 2L flask cooled down to -79 °C using dry ice. The silane obtained was a transparent liquid. Poly(diethyl-co-dimethyl)siloxane (50/50) synthesis was done without prior oxygen removal from water. The 8L glass cylinder was placed in the ice bath (polypropylene box) and cooled down to 0-5 °C. The reactor was equipped with the bubbler to check for eventual gas evolution. Deionized water (3.7 L) was added to the glass reactor cooled on the ice bath to 5 °C. The stirring was set to 200 rpm. Then, 306 g Diethyldichlorosilane and 251.37g Dichlorodimethylsilane (ThermoScientific, Lot A0439125), were added into the glass column equipped with the Teflon valve (glass was dried at 100°C under vacuum and kept under slight N2 flow). The silanes were mixed using the Teflon bar and added dropwise into 3.7 L water at the rate of about three drops per second. The reaction medium temperature was maintained between 5-7°C. The silane hydrolysis was conducted during two hours at 300 rpm.

Subsequently, the reactor was placed in the polypropylene water bath heated to 40 °C so that the reaction medium temperature was 30-35 °C. Silanols were stirred at 300 rpm for additional 2 hours. Then, 1.5L heptane were added, the silanol separated from the aqueous phase and HCl(aq) solution was pumped out under the silanol oligomer layer using the silicone tubing (slight vacuum). The silanol oligomers were extracted with 1L heptane and another 1.5L heptane was used to wash the reactor and separation funnel (500 ml funnel). 25g MgSO₄ were added and stirred at 200 rpm to dry the silanol oligomers. Humid MgSO₄ was filtered and silanol oligomers were kept overnight in 2L heptane under nitrogen. The organic solvent was distilled out at 90 °C using the rotary evaporator under vacuum. Obtained 313.2 g silanol oligomer (369.4 g theory), which is 85% yield. Viscosity according to the standard ASTM E3116-18 of January 25, 2018: 35 mPa.s (Viscosimeter Model: VSC-N4 (Bioevopeak, China) - Measuring Range: 20~2,000,000 mPa.s).

Silanols were placed in 2L glass flask for 120 minutes at 145 °C (air, no vacuum). Viscosity was measured after 2 hours at 145 °C upon cooling down to 25 °C (thermostat). Viscosity: 38 mPa.s. The silanol was purged with nitrogen, closed with silicone septum in 1L container and kept at - 20 °C (to prevent further condensation with water).

### STEP 2 (step b)

298 g silanol oligomers obtained in step 1 were heated at 145 °C for 15 minutes and, while hot, subjected to vacuum (<2 mbar vacuum) for 30 minutes till no bubble formation was observed. Silanol oligomers were then poured hot into dry 1L flask equipped with silicone septum, magnetic stirrer, and nitrogen flow. Subsequently, 35 mg Indium(III) triflate per 100g silanol oligomer were added under nitrogen flow. The catalyst was dispersed in the silanol oligomer by mixing at 500 rpm. Then, the reaction was left to proceed overnight (17 hours) without stirring in a tightly closed container. The viscosity build-up was observed. Next day, 57 mg Tris(Pentafluorophenyl)borane catalyst (Sigma-Aldrich, #442593) were added under nitrogen, and mixed for 5 minutes at 500 rpm, and the reaction left to proceed for additional 24 hours.

### STEP 3 (step c)

35 mg of Tris(Pentafluorophenyl)borane catalyst (Sigma-Aldrich, #442593) were added into the reaction medium, followed by 1.5 ml of Vinyldimethylmethoxysilane (AB106075, ABCR-Germany). The reaction medium was mixed for 5 minutes, then the reaction continued for additional 5 hours without stirring. Finally, the reaction product transferred to the rotary evaporator and the excess of vinyldimethylmethoxysilane and other volatiles distilled out at 95 °C/30 mbar.

### STEP 4 : Catalyst removal (step d).

The siloxane polymer obtained in step 3 was cooled down to room temperature and 150 g of neutral Aluminium oxide (#199974, Sigma Aldrich) were added together with 600 ml heptane. The suspension was stirred at 300 rpm for 20 minutes. The solids were then removed by filtration on a ceramic filter porosity 2, then porosity 4 and, finally, 0.45 um PTFE filter. The solvent was distilled out using rotary evaporator heated up to 95 °C down to 30 mbar vacuum. Finally, the siloxane polymer was heated at 150 °C at <1 mbar vacuum for one hour(vacuum oven). No significant mass loss was measured by DSC between -80 and 200 °C.

Viscosity according to the standard ASTM E3116-18 of January 25, 2018: 4012 mPa.s, Mw = 45 000 g/mol (Viscosimeter Model: VSC-N4 (Bioevopeak, China) - Measuring Range: 20~2,000,000 mPa.s).

DSC according to the standard ASTM E1356 of May 15, 2014 on this material gave Tg = -139 °C (2 °C/min, N2) (Model: DSC 3, Mettler Toledo, Switzerland).

### Example 2: Silicone formulation for the preparation of a silicone rubber example:

50 g siloxane polymer Mw 45 500 g/mol (synthesized in STEPS 1-4 above) 15 g SiO₂ (HDK H2000, Wacker Germany)
7 mg 1-Ethynyl-1-cyclohexanol, 99% (E51406, Sigma-Aldrich) (Pt inhibitor) 140 mg Pt catalyst* (Platinum(0)-2,4,6,8-tetramethyl-2,4,6,8-tetravinylcyclotetrasiloxane complex solution -Sigma Aldrich, #479543) 1.35 g HMS-H271 crosslinker (Gelest, USA) (25-30% Methylhydro)-Dimethylsiloxane copolymer, hydride terminated, 24-60 cSt)

The ingredients were mixed in the mixer at 2000 rpm and cured at 150 °C/1hour or, at room temperature for 24 hours.

Elastic crosslinked silicone rubber (30 wt.% SiO₂) was obtained having Tg = -138 °C, manifesting no crystallization or melting between -150 and +250 °C measured by DSC according to the standard ASTM E1356 of May 15, 2014 (Model: DSC 3, Mettler Toledo, Switzerland). Shore A hardness: 35-40 (measured using HBA100-0 (Kern, Switrerland according ASTM D2240-15(2021) from July 23, 2021). Elongation at break: 348 % (measured by INSTRON 34TM-10, France, using the Standard AFNOR NF T 46002 of September 1988, H2).

### Example 3: Triethylsilyl-terminated Poly(dimethyl-co-diethyl) siloxane (50/50) silicone oil

### Step (a): hydrolysis

The 1L flask with four inlets, condenser, side arm, outlet for gas vent out and magnetic bar was filled with 370 ml deionized water. The apparatus was then cooled down to 5 °C and 30.0 g dichlorodiethylsilane (Gelest, SID3402.0, Gelest) and 24.6 g dichlorodimethylsilane (ThermoScientific, #113312500), both cooled down to 5°C and mixed, were added dropwise (at the rate of 3 drops per second) for one hour. The reaction medium was stirred at 600 rpm. Subsequently, the reaction temperature was raised to 30 °C and stirred for another hour. 500 ml heptane were added and the silicone separated from aqueous phase in the separation funnel. The organic phase was washed with deionized water till neutral pH.

The reaction product in heptane was transferred to 1L flask and residual water dried using 50g anhydrous MgSO₄. The product was filtered using ceramic filter porosity P4 and 0.45 um PTFE microfliter. Heptane and volatiles were removed using rotary evaporator at 90 °C/vacuum down to 18 mbar. Additional vacuum at RT down to 1 mbar did not show any volatiles.

### Step (b): chain extension

The product was transferred into dry 100 ml round bottom flask equipped with magnetic stirring bar under N₂ flow. Then 14 mg In(III)triflate were added and stirred for 30 minutes. This was followed by addition 14 mg Tris(Pentafluorophenyl)borane catalyst (Sigma-Aldrich, #442593) dissolved in 2 ml anhydrous Toluene (Sigma Aldrich, #244511). The reaction medium was stirred for another 30 minutes.

### Step (c2):

Finally, 5 ml Triethylsilane (Sigma 230197-25G) and 6.5 mg Tris(pentafluorophenyl)borane dissolved in 1 ml Toluene. The solution was stirred for 30 min till bubble evolution ceased. The catalysts were adsorbed on 25g neutral Al₂O₃ under constant mixing at 400 rpm. The reaction medium was mixed for 10 minutes, then 200 ml heptane were added and the suspension filtered on ceramic P2 and P4 filters followed by 0.45 um PTFE microfilter. The solvent was distilled out at 90 °C/20 mbar followed by < 1 mbar vacuum at room temperature. The product identity was confirmed by FTIR and Raman spectroscopy. The glass transition Tg = -140 °C was measured by DSC at the rate of 2 °C/min under nitrogen flow.

### Example 4: Triethylsilyl-terminated Poly(methylhydro-co-diethyl) siloxane (50/50) silicone oil (crosslinker)

### Step a): hydrolysis

In the 1L flask equipped with four inlets, condenser, side arm, outlet for the gas vent out and magnetic stirring bar were purged under slight stream of nitrogen at 25 °C. Then, 22 g diethyldiethoxysilane (Gelest, SID3404), followed by 16.8 g methyldiethoxysilane (Sigma-Aldrich, #66612) under constant stirring at 400 rpm.

### Steps b) and c1)

Finally, 7.5 mg In(III)triflate catalyst were added using the Pasteur pipette directly into the monomer mix followed by 11 ml of deionized water pipetted in 10 minutes intervals (3x3 ml + 2 ml) at 400 rpm at 29 °C. Following one hour of stirring, the reaction product was transferred into 250 ml flask and water dried by adding 25g of anhydrous MgSO₄. The product was dissolved in 100 ml heptane and filtered using 0.45 um PTFE filter and volatiles/solvent removed using rotary evaporator at 80 °C/vacuum down to 35 mbar. Additional vacuum at RT down to 1 mbar did not show any volatiles.

Into the reaction product obtained in the previous step under N₂ flow were added 7 mg Tris(Pentafluorophenyl)borane catalyst (Sigma-Aldrich, #442593) dissolved in 1 ml anhydrous Toluene (Sigma Aldrich, #244511) and 5 ml Triethylsilane (Sigma 230197-25G) under constant stirring at 400 rpm. The solution was stirred for 30 min till bubble evolution ceased. The borane catalyst was adsorbed on 25g neutral Al₂O₃. The reaction medium was mixed for 10 minutes (magnetic Teflon bar), then 100 ml heptane were added and the suspension filtered on ceramic P2 and P4 filters followed by 0.45 um PTFE microfilter. The solvent was distilled out at 90 °C/20 mbar followed by <1 mbar vacuum at room temperature. The product identity (clear transparent liquid) was confirmed by FTIR and Raman spectroscopy. The glass transition Tg = -144.7 °C was measured by DSC at the rate of 2 °C/min under nitrogen flow.

### Example 5: Synthesis of Poly (ethyl methyl siloxane) - PEMS

### STEP a (hydrolysis)

Ethylmethyldichlorosilane (#AB111135, ABCR Germany) was used as received (97% pure). It appeared as a clear transparent pink liquid.

This synthesis was done in the air atmosphere. The 20L glass reactor was cooled down to 5 °C. 1L side arm used for silane dropwise addition was equipped with the bubbler and was kept under slight nitrogen flow during the silane addition. Deionized water (1.4 L) was cooled down and maintained at 4-6 °C during the chlorosilane addition. The stirring was set to 200 rpm. First, 213.0 g (instead of 210 g) Ethylmethyldichlorosilane were dropped into 1.4 L water (3 drops per second). Then, the reaction medium temperature was gradually raised to 30 °C and stirred at 200 rpm for 2h 30min. Transparent silanol layer formed on the water surface.

The silanol was extracted with 1.25L heptane and dried using 250g MgSO₄. Heptane was distilled out using rotary evaporator at 90-95 °C followed by vacuum at 1 mbar at the room temperature. The viscosity of obtained silanol was 31.7 mPa.s. The silanol in 1L round bottom flask was then placed in the oven at 145 °C for 20 minutes. The silanol was cooled down to RT. Subsequently, 100 mg Indium(III) triflate were added under constant stirring of 200 rpm. Then, the silanol was left to polymerize over the weekend. Obtained 115.0 g silicone (131.83 g theory), 87% yield.

### STEP b (chain extension)

50 g PEMS silanol obtained in step a) were mixed with 50 mg In(III) triflate (#422151, Sigma-Aldrich), stirred for 5 minutes at 200 rpm and left to polymerize during weekend (no stirring). Subsequently, water and volatiles were removed from silicone using rotary evaporator at 95 °C under vacuum of 30 mbar. Then, the silanol was mixed with 125 g anhydrous MgSO₄ and solubilized in 400 ml heptane. The solids were filtered on P4 ceramic filter and heptane distilled out at 95 °C. The silanol was heated at 145 °C for 10 minutes at 1 mbar vacuum. The silanol was then cooled down to room temperature and 25 mg Tris(Pentafluorophenyl)borane followed by 2 ml Toluene were added, mixed for 2 minutes, and kept in a 1L flask closed with silicone septum under N₂ atmosphere (no stirring). The silanol was left to polymerize overnight.

### STEP c1

The silanol obtained in the Step b was heated to 95 °C under 25 mbar of vacuum in order to remove water and volatiles. Subsequently, 0.33 g vinyl-1,1,3,3-tetramethyldisiloxane, 98% (SIV9097.5, Gelest, USA) and 25 mg Tris(Pentafluorophenyl)borane, 95% (#442593, Sigma Aldrich) followed by 2 ml Toluene were added. The silicone was mixed for 5 minutes at 200 rpm and left to react for 2 hours at 25 °C. Finally, the vacuum line was connected and volatiles distilled out at 95 °C at 30 mbar vacuum. Silicone was diluted in 200 ml hexane and mixed with 25 g Al₂O₃ (neutral alumina) and the suspension mixed for 10 minutes. The adsorbed catalyst on alumina was removed by filtration on a ceramic P4 filter followed by 0.45 um PTFE microfilter. Solvent was distilled out at 95 °C using rotary evaporator and the polymer transferred into dry 250 ml glass flask and subjected to 1 mbar of vacuum at 150 °C followed by 170 °C (each 20 minutes). Viscosity 5500 mPa.s

The obtained material was subjected to DSC. Measured Tg = -141 °C at 2 °C/min, under N₂. FTIR and Raman measurements indicated no presence of cyclic products. FTIR and Raman spectra of the product conform with calculated PEMS spectra at the B3LYP/6-311G (d,p) level)

### (Gaussian16).

Crosslinking: 5 g PEMS silicone (STEPc1), 1.5 g SiO₂ (HDK H2000), 14 mg Pt(0) in teravinylcycloterasiloxanes (#479543, Sigma Aldrich), 135 mg HMS H271 (Gelest, USA) at 35 °C/overnight followed by 20 minutes at 150 °C.

Elastic crosslinked silicone rubber was obtained Tg = -139 °C and manifesting no crystallization or melting behaviour between -139 and +250 °C.

No silicone crystallization was observed at 2 °C/min under N₂ from +25 to -130 °C.

## Claims

1. Process of preparation of polysiloxane containing methyl and ethyl groups, said process comprising the step of
a) hydrolysis reaction of the silanol precursors;
b) extension of the chain of the silanol-terminated siloxane oligomers obtained in step a) by means of a Lewis acid-induced polycondensation by the addition of a triflate salt catalyst, in particular In(III)triflate, followed by the addition of a perfluoroborane catalyst, in particular Tris(Pentafluorophenyl)borane.

2. The process of claim 1 **characterized in that** the polysiloxane containing methyl and ethyl groups is selected in the group consisting of:
- a poly(dimethyl-co-diethyl) or poly(methylhydro-co-diethyl) siloxane of the following formula (I): 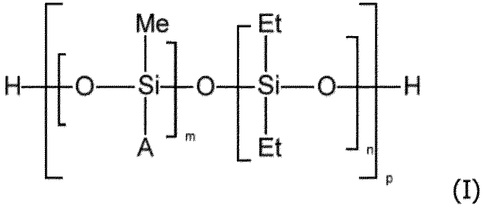
in which A represents a methyl group or a hydrogen atom
m and n represents the molar % of the repeating motif -O-Si(Me)(A) and -O-Si(Et₂) respectively with
m = 0.5-0.8, n = 0.2-0.5 and m+n =1
p represent the number of both repeating motifs in order to obtain a weight average molecular weight in the range of 20 000 g/mol to 150 000 g/mol when A represents a methyl group and in the range of 300 g/mol to 3500 g/mol when A represents a hydrogen atom and
- a poly(ethyl methyl siloxane) of the following formula (II): 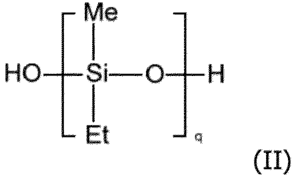 in which q represent the number of repeating motifs.

3. The process of claim 2 **characterized in that** the silanol precursors of step a) is selected among (R1)₂ethylmethylsilane, a mixture of (R1)₂dimethylsilane and (R1)₂diethylsilane and a mixture of (R1)₂methylsilane and (R1)₂diethylsilane, in which R1 represents a chlorine atom, a (C₁-C₆) alkoxy group an acetoxy group or an oxime group, advantageously R1 represents a chlorine atom, a methoxy group or an ethoxy group.

4. Process according to any one of claims 1 to 3, **characterized in that** the In(III)triflate catalyst is present in an amount of 0.1mg to 1mg per gram of oligomers.

5. Process according to any of claims 1 to 4, **characterized in that** step b) is carried out at room temperature.

6. Process according to any one of claims 1 to 5 **characterized in that** step b) is carried out in bulk, without any solvent.

7. Process according to any of claims 2 to 6, **characterized in that**:
- the poly(dimethyl-co-diethyl)siloxane obtained in step b) has a weight average molecular weight in the range of 20 000 g/mol to 150 000 g/mol,
- the poly(methylhydro-co-diethyl)siloxane obtained in step b) has a weight average molecular weight in the range of 300 g/mol to 3500 g/mol and
- the poly(ethyl methyl siloxane) obtained in step b) has a weight average molecular weight in the range of 1 000 g/mol to 200 000 g/mol.

8. Process according to any of claims 1 to 7, **characterized in that** it further comprises a step c1) of addition of a vinyl terminal group by reaction of the polymer obtained in step b) with vinyldimethylmethoxysilane or vinyl-1,1,3,3-tetramethyldisiloxane in presence of a Lewis acid catalyst, such as In(III)triflate without any solvent or B(C₆F₅)₃ in toluene as the solvent or without any solvent or a mixture of In(III)triflate and B(C₆F₅)₃, at temperatures from 20 to 70 °C, advantageously in order to obtain:
- a polymer having the following formula (III): 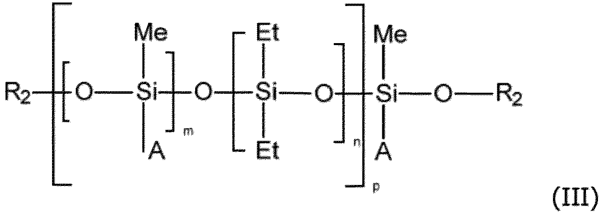
in which A, m, n and p are as defined in formula I
and R₂ = -Si(CH₃)₂CH=CH₂.
- or a polymer having the following formula (IV): 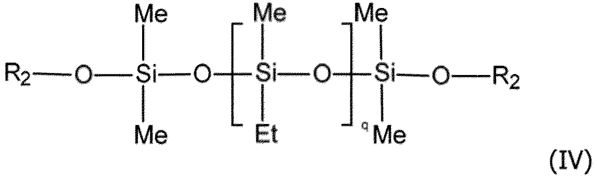 in which q is as defined in formula II and R₂ = -Si(CH₃)₂CH=CH₂.

9. Process according to claim 8, **characterized in that**:
- the poly(dimethyl-co-diethyl)siloxane obtained in step c1) has a glass transition temperature in the range of -130°C to -142 °C,
- the poly(methylhydro-co-diethyl)siloxane obtained in step c1) has a glass transition temperature in the range of -130°C to -146 °C and
- the poly(ethyl methyl siloxane) obtained in step c1) has a glass transition temperature in the range of -130°C to -142 °C.

10. Process according to any of claims 1 to 7, **characterized in that** it further comprises a step c2) of addition of a trialkylsilyl terminal group by reaction of the polymer obtained in step b) with a trialkylsilane in presence of a Lewis acid catalyst such as B(C₆F₅)₃ in toluene as the solvent, advantageously in order to obtain :
- a polymer having the following formula (V): 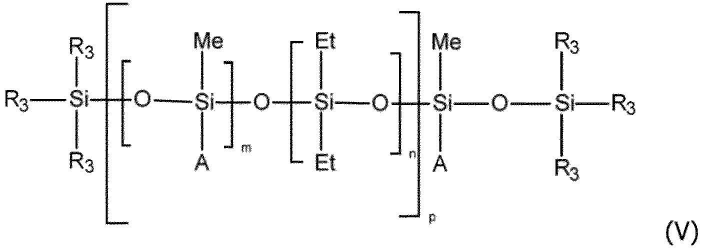
in which A, m, n and p are as defined in formula I
and each R₃ represents independently of each other a saturated, linear or branched, C₁-C₆ alkyl group or
- a polymer having the following formula (VI): 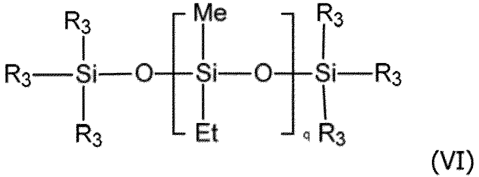
in which q is as defined in formula II
and each R₃ represents independently of each other a saturated, linear or branched, C₁-C₆ alkyl group.

11. Process according to any of claims 2 to 10, **characterized in that** it is for the preparation of a 50/50 poly(dimethyl-co-diethyl)siloxane or 50/50 poly(methylhydro-co-diethyl)siloxane.

12. Poly(dimethyl-co-diethyl)siloxane having:
- the following formula (IIIa): 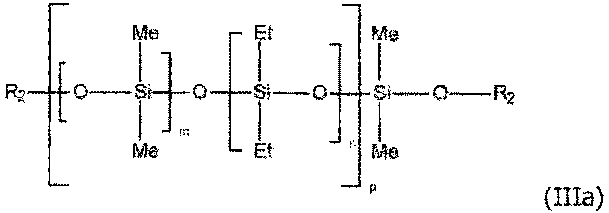 in which R₂, m, n and p are as defined in formula III
- a weight average molecular weight in the range of 20 000 g/mol to 150 000 g/mol and
- a glass transition temperature in the range of -130°C to -142 °C, advantageously obtainable by the process according to anyone of claims 8, 9 and 11.

13. Poly(methylhydro-co-diethyl)siloxane having :
- the following formula (IIIb): 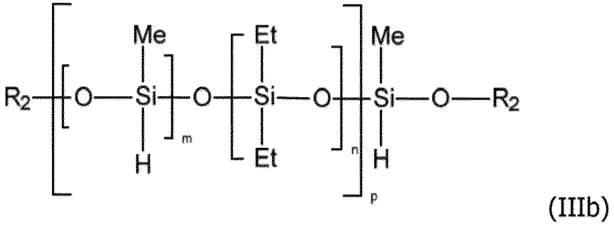 in which R₂, m, n and p are as defined in formula III
- a weight average molecular weight in the range of 300 g/mol to 3500 g/mol and
- a glass transition temperature in the range of -130°C to -146 °C, advantageously obtainable by the process according to anyone of claims 8, 9 and 11.

14. Poly(dimethyl-co-diethyl)siloxane having:
- the following formula (V): 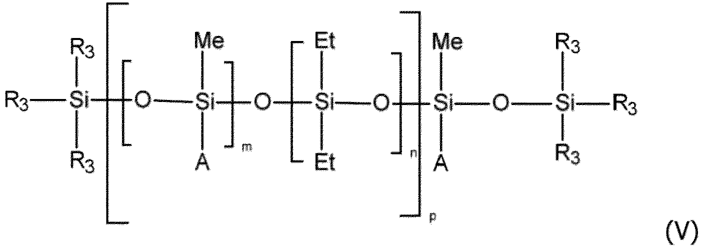 in which R₃, A, m, n and p are as defined in claim 10
- a weight average molecular weight in the range of 500 g/mol to 150 000 g/mol and
- a glass transition temperature in the range of -130°C to -145 °C, advantageously obtainable by the process according to anyone of claims 10 and 11.

15. A composition for the preparation of a silicone rubber comprising:
- (A) 60-94% by weight of the vinyl-terminated poly(dimethy-co-diethyl)siloxanes of formula (IIIa) according to claim 12 ;
- (B) 5-35% by weight of reinforcing filler(s), advantageously pyrogenic silica;
- (C) 1-5% by weight of crosslinkers having Tg < -130 °C; advantageously having the formula (IIIb) according to claim 13;
- (D) a suitable quantity of a curing catalyst, advantageously a Pt(0) catalyst such as Platinum(0)-2,4,6,8-tetramethyl-2,4,6,8-tetravinylcyclotetrasiloxane dissolved in methylvinylcyclosiloxanes and
- (E) optionally an inhibitor such as 1-Ethynyl-1-cyclohexanol.

16. A silicone rubber obtainable by the curing of the composition according to claim 15 and having a glass transition temperature in the range of -130°C to -142 °C, no crystallization/melting transitions in the range of -140°C to +250 °C and an elongation at break above 100%.

17. Use of the silicone rubber according to claim 15 or of the poly(dimethyl-co-diethyl)siloxane of formula (V) according to claim 14 in aerospace industry, in particular in space rovers.

18. Use of the poly(methylhydro-co-diethyl)siloxane having the following formula (IIIb) according to claim 13 as a crosslinker for the preparation of a silicone rubber.
